# EUROPÄISCHE PATENTSCHRIFT

(11) **EP 2 352 377 B1**
(45) Veröffentlichungstag und Bekanntmachung des Hinweises auf die Patenterteilung: **30.12.2020**
(21) Anmeldenummer: 09784062.3
(22) Anmeldetag: 20.11.2009
(51) Int. Cl.: A01N 59/16, B01J 23/68, B01J 23/889, B01J 37/02

(54) **VERWENDUNG EINES BAUTEILS MIT EINER ANTIMIKROBIELLEN OBERFLÄCHE**
Use of a component with an antimicrobial surface
Utilisation d'un composant comportant une surface antimicrobienne

(30) Priorität: 24.11.2008 DE 102008059164
(43) Veröffentlichungstag der Anmeldung: 10.08.2011
(73) Patentinhaber: Siemens Aktiengesellschaft, 80333 München (DE)
(72) Erfinder: DOYE, Christian, 13156 Berlin (DE); KRÜGER, Ursus, 14089 Berlin (DE); PYRITZ, Uwe, 13599 Berlin (DE)
(86) Internationale Anmeldenummer: PCT/EP2009/065540
(87) Internationale Veröffentlichungsnummer: WO 2010/057969

(56) Entgegenhaltungen:
- EP-B1- 1 395 350
- WO-A2-01/11955
- JP-A- 5 203 336
- JP-A- 9 077 620
- JP-A- 63 021 751
- CHOU S ET AL: "Electrodeposition synthesis and electrochemical properties of nanostructured gamma-MnO2 films", JOURNAL OF POWER SOURCES, ELSEVIER SA, CH, vol. 162, no. 1, 8 November 2006 (2006-11-08), pages 727-734, XP027938412, ISSN: 0378-7753 [retrieved on 2006-11-08]

## Beschreibung

Die Erfindung betrifft eine Verwendung eines Bauteils mit einer antimikrobiellen Oberfläche. Aus dem Stand der Technik ist es allgemein bekannt, verschiedene Substanzen zur Erzeugung eines antimikrobiellen Effektes zu vermischen. Diese Substanzen eignen sich potenziell auch zur Verarbeitung in einer Beschichtung für ein Bauteil.

Aus der JP 2001-152129 A ist z. B. ein Pulvergemisch bekannt, welches u. a. auch MgO und Ni enthält. Durch eine Mischung sehr vieler unterschiedlicher Substanzen soll erreicht werden, dass eine antimikrobielle Wirkung für ein möglichst breites Spektrum von Mikroorganismen erreicht wird (vgl. auch Derwent-Abstract zur JP 2001-152129 A). Daher kann das Pulver zur Bekämpfung von Mikroorganismen verwendet werden. Unter Bekämpfung ist im weiteren Sinne zu verstehen, die Vermehrung der Mikroorganismen zu unterdrücken, die Mikroorganismen abzutöten oder sie zu inaktivieren, d. h. sie an der Ausübung einer eventuell schädlichen Wirkung zu hindern. Neben Mikroorganismen, wie Viren und Bakterien, kann eine antimikrobielle Wirkung auch gegenüber Pilzen erreicht werden.

Die Fülle der Substanzen gemäß der JP 2001-152129 A macht es allerdings schwierig, die antimikrobiellen Wirkungen im Einzelnen vorherzusagen. Außerdem wirkt ein Gemisch von antimikrobiellen Substanzen zwar breitbandiger, wirkt dafür eventuell aber nicht mehr so stark.

Gemäß der WO 2006/050477 A2 ist es bekannt, dass antimikrobiell wirksame Oberflächen beispielsweise verwendet werden können, um Trinkwasser keimfrei zu halten. Es wird vorgeschlagen, als antimikrobielle Komponenten Übergangsmetalle, Oxide von Übergangsmetallen, Salze von Übergangsmetallen oder Kombinationen dieser Substanzen zu verwenden. Unter den Übergangsmetallen werden auch Mangan, Silber und Nickel aufgeführt und als Oxid eines Übergangsmetalls u. a. auch Manganoxid. Vorzugsweise kann eine größere Vielzahl von Wirksubstanzen gleichzeitig verwendet werden, um eine Breitbandigkeit hinsichtlich der Wirkung auf verschiedene Mikroorganismen zu erreichen.

Gemäß JP 05 203336 A ist es bekannt, dass eine Filtereinrichtung für einen Kühlschrank mit einem antimikrobiellen Filter ausgestattet sein kann. Dieser kann eine Silberkomponente enthalten. Als Katalysator zur Vermeidung von Gerüchen kann Manganoxid zum Einsatz kommen. Gemäß JP 09 077620 A ist es bekannt, dass antimikrobiell wirkende keramische Pulver aus Mikropartikeln aus Siliziumkarbid, Siliziumoxid, Aluminiumoxid, Manganoxid, Zinkoxid, Titanoxid sowie Silber oder Kupfer bestehen können. Diese Bestandteile werden zu den Pulverpartikeln verbacken. Gemäß WO 01/11955 A2 sind Materialzusammensetzungen beschrieben, die eine antimikrobielle Wirkung zeigen. Unter den antimikrobiellen Substanzen sind Aluminiumoxid, Titanoxid, Kupferoxid, Vanadiumoxid, Siliziumoxid, Manganoxid, Zinkoxid, Magnesiumoxid, Thoriumoxid und Eisenoxid genannt.

Weiterhin ist es bekannt, dass bei Alkalibatterien Mangandioxid als Kathodenmaterial zum Einsatz kommt. Gemäß JP 63 021751 A besteht das Kathodenmaterial aus Mangandioxidpartikeln in der γ-Modifikaton. Diese sind mit einer Schicht aus Nickelpartikeln beschichtet.

Gemäß Shulei Chou et al., "Electrodeposition synthesis and electrochemical properties of nanostructured γ-MnO2 films" Journal of Power Sources 162 (2006), Seiten 727 bis 734 kann eine Kathode für Alkalibatterien auch dadurch erzeugt werden, dass ein Nickelsubstrat mit einer mikrostrukturierten Schicht aus Mangandioxid der γ-Modifikation beschichtet wird.

Die Aufgabe der vorliegenden Erfindung ist es eine Verwendung eines Bauteils anzugeben, welches eine vergleichsweise einfach aufgebaute antimikrobielle Oberfläche mit einer vergleichsweise starken antimikrobiellen Wirkung aufweist.

Diese Aufgabe wird erfindungsgemäß durch die Verwendung eines Bauteils mit einer antimikrobiellen Oberfläche gelöst. Das Bauteil weist dazu eine Oberfläche auf, die metallische Anteile und erstere berührende Anteile von MnO₂ aufweist, wobei der metallische Anteil aus Ag und/oder Ni besteht. Es hat sich nämlich bei der Untersuchung verschiedener Substanzpaarungen, bestehend aus einem Metall und einer Keramik, überraschenderweise gezeigt, dass eine Paarung aus MnO₂ mit Ag und/oder Ni eine besonders hohe antimikrobielle Wirkung aufzeigt. Dadurch lassen sich auf vergleichsweise einfachem Wege Bauteile mit antimikrobiellen Schichten herstellen, wobei diese wegen der vergleichsweise wenigen zum Einsatz kommenden antimikrobiellen Substanzen vorteilhaft besser vorhersagbar in ihrer Wirkung bzw. in ihrer Kompatibilität mit anderen Bauteilen im vorliegenden Anwendungsfall eingeschätzt werden können.

Die Oberfläche des Bauteils muss nicht vollständig mit den metallischen Anteilen und den Anteilen des MnO₂ bedeckt sein. Es genügt bereits eine partielle Beschichtung, um die antimikrobielle Wirkung zu erzielen. Diese ist in Abhängigkeit vom Anwendungsfall so groß zu wählen, dass die zur Verfügung stehende antimikrobielle Oberfläche für den gewünschten Effekt zur Bekämpfung der Mikroorganismen und/oder Pilzen ausreicht.

Erfindungsgemäß ist außerdem vorgesehen, dass das MnO₂ zumindest teilweise in der γ-Modifikation vorliegt. Die γ-Modifikation ist ein Gefügeaufbau des durch das MnO₂ gebildeten Kristalls, welcher vorteilhaft eine besonders starke katalytische Wirkung zeigt. Allerdings liegt das reale Gefüge des MnO₂ nicht ausschließlich in der γ-Modifikation, sondern teilweise auch in anderen Modifikationen vor (z. B. in der β-Modifikation des MnO₂). Allerdings sollte nach einer besonderen Ausgestaltung der Erfindung der Gefügeanteil des MnO₂ in der γ-Modifikation bei über 50 Gew.-% liegen.

Gemäß einer anderen Ausgestaltung der Erfindung ist vorgesehen, dass das Bauteil aus dem den metallischen Anteil der antimikrobiellen Oberfläche zur Verfügung stellenden Metall besteht und eine nur teilweise deckende Schicht aus MnO₂ auf dieses Bauteil aufgebracht ist. Hierbei handelt es sich um Bauteile aus Ag oder Ni, die aufgrund ihrer Materialzusammensetzung den einen für die Herstellung der antimikrobiellen Oberfläche erforderlichen Bestandteil bereits zur Verfügung stellen. Auf diesen Bauteilen ist eine Herstellung der erfindungsgemäßen Oberfläche vorteilhaft besonders einfach möglich, indem eine nicht deckende Schicht aus dem anderen Anteil der Oberfläche, nämlich MnO₂ aufgebracht wird.

Anders herum ist es auch denkbar, dass das Bauteil aus einer den Anteil der antimikrobiellen Oberfläche aus MnO₂ zur Verfügung stellenden Keramik besteht und eine nur teilweise deckende Schicht aus dem Metall auf dieses Bauteil aufgebracht ist. Beispielsweise könnte das Bauteil als verschleißbeanspruchtes Keramikbauteil ausgelegt sein. Dieses muss auch nicht ausschließlich aus MnO₂ bestehen. Beispielsweise ist es denkbar, dass die Keramik als Sinterkeramik aus unterschiedlichen Arten von Partikeln hergestellt wird, wobei das MnO₂ eine Art dieser Partikel darstellt. Zu berücksichtigen ist bei dieser Variante jedoch, dass die Verarbeitungstemperaturen für das Bauteil unterhalb von 535°C liegen müssen, da das MnO₂ bei dieser Temperatur in MnO umgewandelt wird und damit seine hervorragenden antimikrobiellen Eigenschaften in der erfindungsgemäßen Werkstoffpaarung einbüßt.

Gemäß einer anderen Ausgestaltung der Erfindung ist vorgesehen, dass das Bauteil eine Beschichtung aufweist, welche die metallischen Anteile und die Anteile von MnO₂ der Oberfläche zur Verfügung stellt. Bei dieser Variante können Bauteile verschiedener Materialien beschichtet werden, wobei die erfindungsgemäßen antimikrobiellen Eigenschaften der Schicht vorteilhaft alleine durch die Beschaffenheit der Schicht bzw. der durch diese gebildeten antimikrobiellen Oberfläche hervorgerufen wird. Hierbei muss jeweils für den betreffenden Werkstoff des Bauteils ein geeignetes Beschichtungsverfahren ausgewählt werden.

Als Verfahren zur Herstellung der Schicht auf dem Bauteil kann beispielsweise ein Kaltgasspritzen verwendet werden, wobei die antimikrobielle Oberfläche durch Spritzen von MnO₂-Partikeln erzeugt wird. Dabei bildet das MnO₂ nur Anteile der antimikrobiellen Oberfläche, die metallischen Anteile werden durch Ni und/oder Ag gebildet. Die metallischen Anteile können, wie bereits beschrieben, entweder durch das Bauteil selbst zur Verfügung gestellt werden, oder sie werden als Partikel dem Kaltgasstrahl zugegeben, so dass die metallischen Anteile der Oberfläche durch die sich ausbildende Schicht mitgebildet werden.

Insbesondere können auch MnO₂-Partikel verwendet werden, die nur teilweise die γ-Modifikation des MnO₂-Gefüges aufweisen. Dabei muss das Kaltgasspritzen mit Betriebstemperaturen auf jeden Fall unterhalb der Zersetzungstemperatur der γ-Modifikation betrieben werden. Diese Temperatur liegt bei 535°C. Prozesstechnisch kann bei der Wahl der Temperatur des Kaltgasstrahls ein gewisser Sicherheitsabstand zu dieser Zersetzungstemperatur eingehalten werden. Dagegen hat, es sich gezeigt, dass ein kurzzeitiges Überschreiten dieser Temperatur beim Auftreffen der MnO₂-Partikel auf die Oberfläche gefügetechnisch keine Auswirkungen hat, weil diese Temperaturerhöhung extrem lokal nur im Oberflächenbereich der verarbeiteten MnO₂-Partikel auftritt. Der jeweilige Kern der Partikel, der in einem unkritischen Temperaturbereich bleibt, vermag die γ-Modifikation des Partikelgefüges anscheinend genügend zu stabilisieren, so dass die γ-Modifikation des MnO₂-Gefüges auch auf der antimikrobiell wirksamen Oberfläche der Partikel erhalten bleibt.

Außerdem führt eine Erwärmung des MnO₂ über 450°C zu einer Umwandlung des MnO₂ in Mn₂O₃. Dieser Prozess schreitet jedoch nur langsam voran, so dass eine kurzfristige Überschreitung der Temperatur, wie sie beim Kaltgasspritzen auftritt, unschädlich ist.

Um die hervorragenden antimikrobiellen Eigenschaften des MnO₂ zu erhalten, muss die γ-Modifikation des Gefüges zumindest teilweise in den MnO₂-Partikeln enthalten sein. Dies kann durch ein Gemisch der MnO₂-Partikel mit Manganoxidpartikeln anderer Modifikationen verwirklicht sein. Eine andere Möglichkeit besteht darin, dass die Partikel aus Phasengemischen bestehen, so dass die γ-Modifikation des MnO₂ nicht als einzige in den Partikeln vorliegt.

Weiterhin ist es von Vorteil, wenn als MnO₂-Partikel Nanopartikel mit einem Durchmesser > 100 nm verarbeitet werden. Unter Nanopartikel im Sinne dieser Erfindung sind Partikel zu verstehen, die < 1 µm im Durchmesser sind. Es hat sich nämlich überraschenderweise gezeigt, dass sich derart kleine Partikel aus MnO₂ mit einem hohen Abscheidewirkungsgrad auf der antimikrobiellen Oberfläche abscheiden lassen. Normalerweise wird demgegenüber davon ausgegangen, dass sich Partikel von weniger als 5 µm durch Kaltgasspritzen nicht abscheiden lassen, da aufgrund der geringen Masse dieser Partikel die durch den Kaltgasstrahl eingeprägte kinetische Energie zur Abscheidung nicht ausreicht. Warum dies speziell für MnO₂-Partikel nicht gilt, kann nicht genau begründet werden. Anscheinend sind neben dem Effekt der kinetischen Deformation auch andere Haftungsmechanismen bei dem Schichtbildungsprozess im Spiel.

Die Verarbeitung von Nanopartikeln des MnO₂ hat den Vorteil, dass mit vergleichsweise wenig Material eine vergleichsweise hohe spezifische Oberfläche und damit eine starke Ausprägung der antimikrobiellen Wirkung erreicht werden kann. Auch die Grenzlinien zwischen den Anteilen an MnO₂ und metallischen Anteilen der antimikrobiellen Oberfläche werden auf diese Weise vorteilhaft stark verlängert, was sich ebenfalls auf eine hohe Ausprägung der antimikrobiellen Eigenschaften auswirkt.

Von Vorteil ist es, wenn ein Gemisch aus MnO₂-Partikeln und metallischen Partikeln für die metallischen Anteile der antimikrobiellen Oberfläche, also Ni und/oder Ag, verwendet wird. Insbesondere kann dann durch geeignete Wahl von Temperatur und Partikelgeschwindigkeit im Kaltgasstrahl der Energieeintrag in die Partikel so gesteuert werden, dass die die antimikrobielle Oberfläche bildende spezifische (oder innere) Oberfläche der hergestellten Schicht gesteuert wird. Durch eine höhere Porosität der hergestellten Schicht lässt sich nämlich die innere Oberfläche vergrößern, um eine vergrößerte antimikrobielle Oberfläche zur Verfügung zu stellen. Hierdurch kann die keimtötende Wirkung also vergrößert werden. Demgegenüber kann es aber auch von Vorteil sein, wenn die Oberfläche möglichst glatt ausgebildet ist, um einer Verschmutzungsneigung entgegenzuwirken.

Neben der Abscheidung durch Kaltgasspritzen sind selbstverständlich auch andere Herstellungsverfahren denkbar. Beispielsweise kann die antimikrobielle Oberfläche elektrochemisch hergestellt werden. Dabei wird der metallische Anteil der antimikrobiellen Oberfläche als Schicht elektrochemisch aus einem Elektrolyt abgeschieden, in dem Partikel des MnO₂ suspendiert sind. Diese werden während des elektrochemischen Abscheideprozesses dann in die sich ausbildende Schicht eingebaut und bilden damit auch einen Anteil an MnO₂ an der Oberfläche der Schicht.

Ein weiteres Verfahren kann dadurch erhalten werden, dass die Schicht aus einer MnO₂ zumindest enthaltenden Keramik hergestellt wird. Zu diesem Zweck kann eine Mischung aus präkeramischen Polymeren, die Vorstufen der gewünschten Keramik bilden, und Metallpartikeln in einer Lösung auf das zu beschichtende Bauteil aufgetragen werden. Zunächst wird das Lösungsmittel verdampft, anschließend kann durch eine Wärmebehandlung, die vorteilhaft unterhalb der Zersetzungstemperatur der γ-Modifikation des MnO₂ (535°C) liegt, zur Keramik umgewandelt werden. Besser noch bleibt die Temperatur unter 450°C, um die Bildung von Mn₂O₃ zu verhindern.

Mit den genannten Verfahren lassen sich u. a. auch die folgenden Ausgestaltungen des erfindungsgemäßen Bauteils erzeugen. So kann die hergestellte Beschichtung eine metallische Lage aufweisen, auf der eine nur teilweise deckende Lage aus MnO₂ aufgebracht ist. Die metallische Lage bildet damit den metallischen Anteil der Oberfläche, die an den Stellen, wo die Schicht aus MnO₂ nicht deckt, zum Vorschein kommt. Bei dieser Bauteilgestaltung ist vorteilhaft nur ein sehr geringer Anteil an MnO₂ notwendig. Es ist hierbei auch denkbar, die oben aufgeführten Fertigungsverfahren in Kombination anzuwenden. Beispielsweise lässt sich die metallische Lage galvanisch herstellen und die nur teilweise deckende Lage aus MnO₂ durch Kaltgasspritzen.

Eine andere Möglichkeit besteht darin, dass die Beschichtung eine den Anteil von MnO₂ zur Verfügung stellende keramische Lage aufweist, auf der eine nur teilweise deckende metallische Lage aufgebracht ist. Diese Gestaltung des Bauteils ist von Bedeutung, wenn die Eigenschaften der keramischen Schicht konstruktiv bedingt für das Bauteil von Vorteil sind (beispielsweise Korrosionsschutz).

Auch ist es möglich, dass die Beschichtung aus einer den Anteil von MnO₂ zur Verfügung stellenden Keramik besteht, in die metallische Partikel eingebettet sind. Dies ist insbesondere dann von Vorteil, wenn die keramische Schicht verschleißbeansprucht ist und bei fortschreitendem Verschleiß, d. h. Abtrag der Schicht, ihre antimikrobiellen Eigenschaften beibehalten soll. Letzteres wird dadurch gewährleistet, dass beim Abtrag der Keramikschicht immer wieder MnO₂-Partikel freigelegt werden, welche den erfindungsgemäßen Anteil an MnO₂ an der Oberfläche gewährleisten. Natürlich ist es auch denkbar, dass die Schicht eine metallische Matrix aufweist, in die die Partikel aus MnO₂ eingebettet sind. Auch für diese Schicht gilt das Argument, dass bei einem Schichtabtrag die antimikrobiellen Eigenschaften derselben erhalten bleiben.

Das Bauteil kann auch so ausgeführt sein, dass dieses oder eine auf dieses aufgebrachte Schicht aus einer von dem metallischen Anteil und vom MnO₂ verschiedenen Material besteht und in diesem (bei Verschleißbeanspruchung, s. oben) und/oder auf diesem Partikel vorhanden sind, welche jeweils die metallischen Anteile und die Anteile von MnO₂ an ihrer Oberfläche (gemeint ist die Oberfläche der Partikel) zur Verfügung stellen. Hierbei handelt es sich vorteilhaft um maßgeschneiderte Partikel mit antimikrobiellen Eigenschaften, welche universell auf jede Oberfläche oder in jede Matrix eingebracht werden können. Hierbei muss jeweils das zur Einbringung bzw. Aufbringung geeignete Verfahren gewählt werden. Mit dieser Maßnahme lassen sich beispielsweise auch Bauteile aus Kunststoff mit antimikrobiellen Eigenschaften herstellen. Die in die Schicht oder das Bauteil eingebrachten Partikel werden entweder bei einer Verschleißbeanspruchung freigelegt bzw. können bei einer porösen Struktur des Bauteils auch an der 11 antimikrobiellen Wirkung beteiligt sein, wenn diese die Wände der Poren bilden.

Besonders vorteilhaft ist es, wenn das Bauteil eine Oberfläche aufweist, die schwer benetzbar ist. Diese Oberfläche eignet sich für Bauteile, die selbstreinigende Eigenschaften aufweisen sollen, weil sie beispielsweise der Witterung ausgesetzt sind. Es hat sich gezeigt, dass selbstreinigende Eigenschaften, die wesentlich von der geringen Benetzbarkeit der Oberfläche abhängen, verringert werden, wenn Mikroorganismen sich auf dieser Oberfläche ansiedeln. Dies kann durch eine antimikrobielle Wirkung dieser Oberfläche verhindert werden, so dass der Effekt der Selbstreinigung vorteilhaft über einen langen Zeitraum erhalten bleibt.

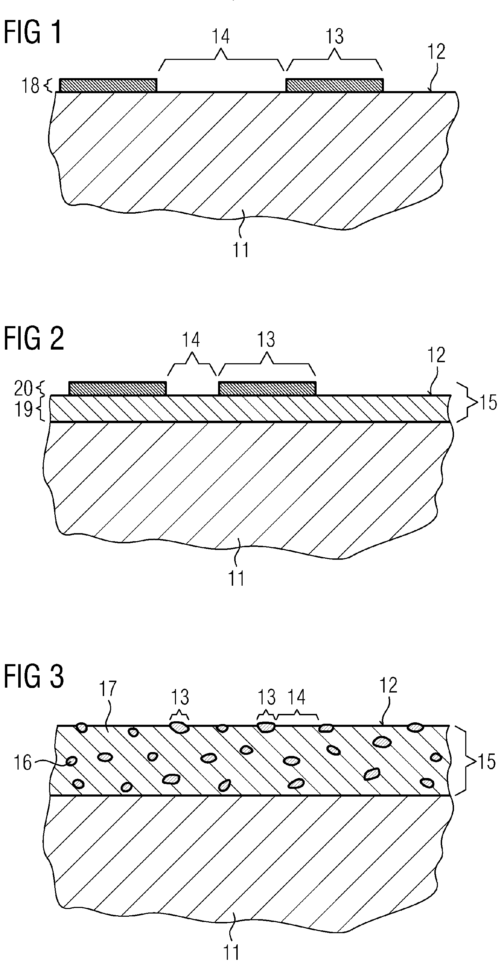

Weitere Einzelheiten der Erfindung werden nachfolgend anhand der Zeichnung beschrieben. Gleiche oder sich entsprechende Zeichnungselemente sind in den einzelnen Figuren mit den gleichen Bezugszeichen versehen und werden nur insoweit mehrfach erläutert, wie sich Unterschiede zwischen den einzelnen Figuren ergeben. Es zeigen die Figuren 1 bis 5 unterschiedliche Ausführungsbeispiele des verwendeten Bauteils mit verschiedenen antimikrobiellen Oberflächen.

Die Figuren 1 bis 5 zeigen jeweils ein Bauteil 11 mit einer Oberfläche 12, die antimikrobielle Eigenschaften aufweist. Diese Eigenschaften werden dadurch erzeugt, dass die Oberfläche jeweils einen Anteil 13 hat, der aus MnO₂ besteht und weiterhin ein metallischer Anteil 14 aus Ag oder Ni zur Verfügung gestellt wird.

Der Aufbau der Bauteile 11, der jeweils im Schnitt dargestellt ist, weist jedoch Unterschiede auf. Das Bauteil gemäß Figur 1 besteht selbst aus Ni oder Ag, so dass dessen Oberfläche 12 automatisch den metallischen Anteil 14 zur Verfügung stellt. Auf der Oberfläche 12 sind weiterhin inselartige Bereiche aus MnO₂ gebildet, die den Anteil 13 zur Verfügung stellen. Diese können beispielsweise als nicht deckende Beschichtung durch Kaltgasspritzen aufgebracht werden.

Gemäß Figur 2 ist ein Bauteil 11 dargestellt, welches aus einem zur Erzeugung der antimikrobiellen Eigenschaften der Oberfläche ungeeigneten Material besteht. Daher wird auf dieses Bauteil 11 eine metallische Schicht 15 aus Ni oder Ag aufgebracht. Auf dieser Schicht, die den Anteil 14 zur Verfügung stellt, wird MnO₂ in der zu Figur 1 beschriebenen Weise aufgebracht, so dass auch Anteile 13 entstehen.

In Figur 3 ist dargestellt, dass die metallische Schicht auch mit Partikeln 16 aus MnO₂ dotiert sein kann, d. h., dass sich diese Partikel in der metallischen Matrix 17 der metallischen Schicht 15 befinden. Insofern bilden sie auch denjenigen Teil der Oberfläche 12, der den Anteil 13 zur Verfügung stellt. Der Rest der Oberfläche bildet den Anteil 14.

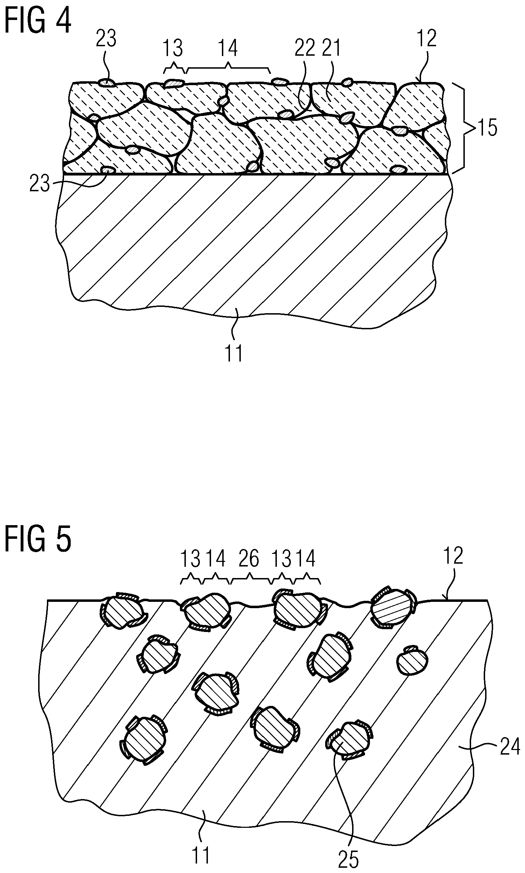

In Figur 4 wird die Beschichtung 15 durch eine keramische Matrix 21 gebildet, wobei diese Poren 22 aufweist, welche die innere Oberfläche im Vergleich zur äußeren Oberfläche 12 des Bauteils vergrößern und so auch einen antimikrobiellen Effekt verstärken. In der keramischen Matrix 21 sind metallische Partikel 23 vorgesehen, die sowohl an der Oberfläche 12 den Anteil 13 zur Verfügung stellen, als auch in den Poren antimikrobiell wirksam werden können. Wie auch bei Figur 2 und Figur 3 kann das Bauteil 11 gemäß Figur 4 aus einem beliebigen Material bestehen, wobei nur die Haftung der Beschichtung 15 auf dem Bauteil 11 sichergestellt werden muss.

Das Bauteil 11 gemäß Figur 5 weist eine Matrix aus einem beliebigen Material 24, z. B. Kunststoff auf. In dieses sind Partikel 25 eingebracht, deren jeweilige Oberfläche sowohl metallische Anteile aus Ni oder Ag wie auch Anteile an MnO₂ aufweisen. Bei dem Ausführungsbeispiel gemäß Figur 5 bestehen die Partikel selbst aus dem Metall und die keramischen Anteile sind auf der Oberfläche der Partikel ausgebildet. Denkbar ist selbstverständlich auch der umgekehrte Fall. Die Partikel liegen an der Oberfläche 12 des Bauteils 11 teilweise frei, wodurch die metallischen Anteile 14 und die Anteile 13 aus MnO₂ 13 gebildet werden. Weiterhin gibt es Anteile 26 der Oberfläche 26 aus Kunststoff, welche nicht antimikrobiell wirksam sind. Das Verhältnis der genannten Anteile kann direkt durch den Füllgrad von Partikeln 25 in dem Material 24 beeinflusst werden.

In der nachfolgend dargestellten Tabelle sind für Oberflächenproben gemäß der Erfindung die durch diese erzeugten antimikrobiellen Eigenschaften zu erkennen. In Versuchen wurden folgende Oberflächen untersucht. Eine reine Ni-Oberfläche, eine Oberfläche, gebildet aus Ni und Pd, die erfindungsgemäße Oberfläche mit Ni und MnO₂, als weitere Referenz eine Oberfläche, bestehend aus Ni, Pd und MnO₂ und zuletzt die erfindungsgemäße Oberfläche, bestehend aus Ag und MnO₂. Die Referenzoberflächen mit Pd wurden untersucht, weil diesem Material an sich und in Kombination mit Ag eine hohe antimikrobielle Wirkung zugeschrieben wird. Die reine Ni-Oberfläche wurde untersucht, um einen Referenzwert für die antimikrobielle Wirkung dieses Metalls an sich zu erhalten. Die antimikrobielle Wirkung von Ag und Ag/Pd ist allgemein bekannt und auch nachgewiesen, weswegen hierzu keine Probe untersucht wurde.

Die untersuchten Oberflächen wurden durch die Herstellung von Schichten mittels Kaltgasspritzen erzeugt. Je nach gewünschter Oberflächenzusammensetzung wurden geeignete Pulvergemische verspritzt. Hierbei hat es sich gezeigt, dass sich insbesondere MnO₂ in unerwartet hohen Konzentrationen verarbeiten ließ, so dass ein verhältnismäßig hoher Anteil an MnO₂ an der Oberfläche erreichbar war.

Um die antimikrobielle Wirkung nachzuweisen, wurden die Oberflächen durch Bakterienkulturen von Escherichia coli und Staphylococcus aureus besiedelt. Die Prüfung der Materialien erfolgte nach ASTM E 2180-01. Die Testkeime wurden für eine halbe bzw. 4 Stunden auf den betreffenden Oberflächen vor der Ermittlung der lebensfähigen Keime inkubiert. Die Testflächen wurden während der Durchführung der Prüfungen bei 20°C gelagert. Die Testkeime wurden suspendiert, wobei die Suspension eine Keimzahl zwischen 10⁶ und 10⁷ je ml enthielt. Die Kontamination der Testflächen erfolgte durch Aufbringen von je 0,5 ml der Keimsuspension, die für die Versuchsdauer waagerecht gelagert wurden. Die Zahl der rückgewinnbaren Keime wurde nach unterschiedlichen Zeiten, und zwar nach einer halben bzw. nach vier Stunden bestimmt. Zur Bestimmung der Zahl der keimbildenden Einheiten (KBE) wurde eine Bebrütung der von den Proben abgelösten Restkeime vorgenommen. Die Zahl der zurückgewonnenen KBE wurde zu der rechnerisch ursprünglich insgesamt auf der Probefläche vorhandenen Keime ins Verhältnis gesetzt, so dass der in der Tabelle aufgeführte prozentuale Wert Aufschluss über die noch lebende Restmenge von Keimen gibt.

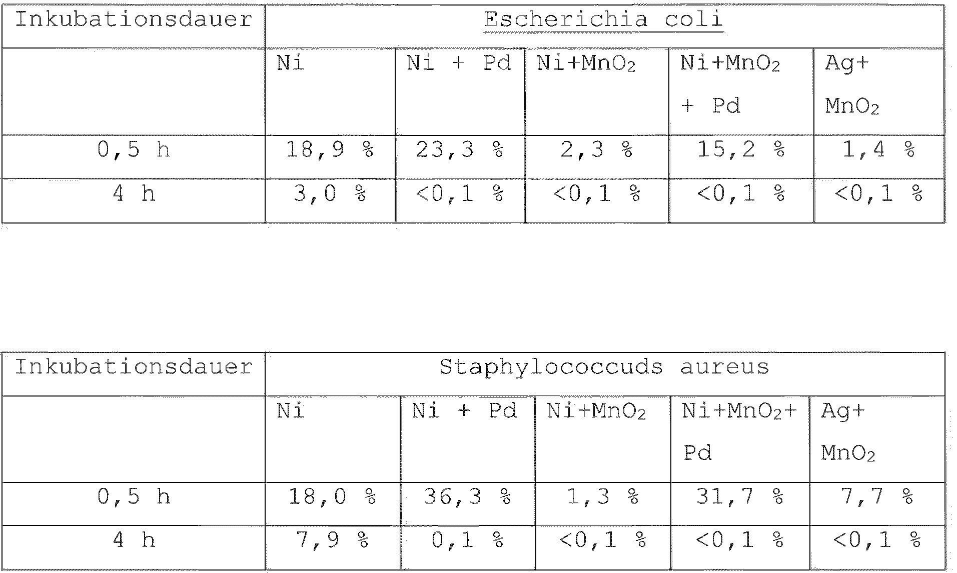

Ein Vergleich der Untersuchungsergebnisse gemäß der Tabelle lässt folgende Aussagen zu. Die Oberflächen, bestehend lediglich aus Ni und MnO₂ bzw. Ag und MnO₂ weisen die mit Abstand am stärksten ausgeprägten antimikrobiellen Eigenschaften auf, was insbesondere durch die Werte nach einer halben Stunde zu belegen ist. Es findet also nicht nur eine fast vollständige, sondern auch eine schnelle Keimtötung statt. Es zeigt sich auch, dass die Paarung Ni und MnO₂ der Paarung Ag und MnO₂ nicht unterlegen ist, obwohl Ni allein, anders als Ag allein, keine hervorragenden antimikrobiellen Eigenschaften aufweist. Dies hat den Vorteil, dass statt dem häufig für keimtötende Zwecke verwendeten Silber das physiologisch völlig unbedenklich Ni verwendet werden kann. Dies macht die erfindungsgemäßen Oberflächen auch für Anwendungen beispielsweise in der Lebensmittelindustrie zugänglich, die der in Lösung gehenden Ag-Ionen wegen von Ag-haltigen Oberflächen Abstand genommen hat.

Weiterhin ist zu erkennen, dass die antimikrobielle Wirkung nicht mit beliebigen Paarungen von MnO₂ mit Metallen erzeugt werden kann. Wie das Beispiel Ni + Pd sowie auch das Beispiel Ni + Pd + MnO₂ zeigt, verringert sich die antimikrobielle Wirkung durch die Anwesenheit von Pd, was bei der Erzeugung antimikrobieller Oberflächen berücksichtigt werden muss. In einem solchen Fall sollte ein metallisches Bauteil, dessen eigene Oberfläche die antimikrobiellen Eigenschaften der Systeme Ni-MnO₂ oder Ag- MnO₂ verschlechtert, vollständig durch eine Schicht abgedeckt werden, die die antimikrobielle Oberfläche zur Verfügung stellt.

## Patentansprüche

1. Verwendung eines Bauteils mit einer antimikrobiellen Oberfläche (12) zur Bekämpfung von mit dem Bauteil in Kontakt kommenden Mikroorganismen und/oder Pilzen, wobei die Oberfläche (12) metallische Flächenanteile (14) und erstere berührende Flächenanteile (13) von MnO₂ aufweist, wobei der metallische Flächenanteil (14) aus Ag und/oder Ni besteht und wobei
das Manganoxid zumindest teilweise in der γ-Modifikation des MnO₂ vorliegt.

2. Verwendung nach Anspruch 1, wobei
der in der γ-Modifikation vorliegende Gefügeanteil des MnO₂ über 50 Gew.-% des MnO₂ ausmacht.

3. Verwendung nach Anspruch 1, wobei das Bauteil aus dem den metallischen Flächenanteil (13) der antimikrobiellen Oberfläche (12) zur Verfügung stellenden Metall besteht und eine nur teilweise deckende Schicht (18) aus MnO₂ auf dieses Bauteil aufgebracht ist.

4. Verwendung nach einem der Ansprüche 1 oder 2, wobei das Bauteil aus einer den Flächenanteil (13) der antimikrobiellen Oberfläche (12) von MnO₂ zur Verfügung stellenden Keramik besteht und eine nur teilweise deckende Schicht aus dem Metall auf dieses Bauteil aufgebracht ist.

5. Verwendung nach einem der Ansprüche 1 oder 2,wobei das Bauteil eine Beschichtung (15) aufweist, welche die metallischen Flächenanteile (14) und die Flächenanteile (13) von MnO₂ der Oberfläche (12) zur Verfügung stellt.

6. Verwendung nach Anspruch 5, wobei
die Beschichtung (15) eine metallische Lage (19) aufweist, auf der eine nur teilweise deckende Lage (20) aus MnO₂ aufgebracht ist.

7. Verwendung nach Anspruch 5, wobei
die Beschichtung (15) eine den Flächenanteil (13) von MnO₂ zur Verfügung stellende keramische Lage aufweist, auf der eine nur teilweise deckende metallische Lage aufgebracht ist.

8. Verwendung nach Anspruch 5, wobei
die Beschichtung (15) aus einer den Flächenanteil (13) von MnO₂ zur Verfügung stellenden Keramik besteht, in die metallische Partikel (23) eingebettet sind.

9. Verwendung nach Anspruch 5, wobei
die Beschichtung (15) aus einer metallischen Matrix (17) besteht, in die Partikel (16) aus MnO₂ eingebettet sind.

10. Verwendung nach einem der Ansprüche 1 oder 2, wobei
dieses oder eine auf dieses aufgebrachte Schicht aus einer von dem metallischen Flächenanteil (14) und vom MnO₂ verschiedenen Material (24) besteht und in diesem und/oder auf diesem Partikel (25) vorhanden sind, welche jeweils die metallischen Flächenanteile (14) und die Flächenanteile (13) von MnO₂ an ihrer der Oberfläche (12) zur Verfügung stellen.

11. Verwendung nach einem der vorangehenden Ansprüche, wobei die Oberfläche schwer benetzbar ist.

12. Verwendung eines Bauteils nach einem der vorangehenden Ansprüche in der Lebensmittelindustrie.

## Claims

1. Use of a component having an antimicrobial surface (12) for combating microorganisms and/or fungi that come into contact with the component, wherein the surface (12) has metallic surface portions (14) and, touching the former, MnO₂ surface portions (13), wherein the metallic surface portion (14) consists of Ag and/or Ni, and wherein the manganese oxide is present at least partially in the γ modification of MnO₂.

2. Use according to Claim 1, wherein the structural part of the MnO₂ present in the γ modification makes up more than 50% by weight of the MnO₂.

3. Use according to Claim 1, wherein the component consists of the metal providing the metallic surface portion (13) of the antimicrobial surface (12), and an only partially covering layer (18) of MnO₂ is applied to this component.

4. Use according to either of Claims 1 and 2, wherein the component consists of a ceramic providing the surface portion (13) of the antimicrobial surface (12) of MnO₂, and an only partially covering layer of the metal is applied to this component.

5. Use according to either of Claims 1 and 2, wherein the component has a coating (15) which provides the metallic surface portions (14) and the MnO₂ surface portions (13) of the surface (12).

6. Use according to Claim 5, wherein the coating (15) has a metallic layer (19) to which an only partially covering layer (20) of MnO₂ is applied.

7. Use according to Claim 5, wherein the coating (15) has a ceramic layer, which provides the MnO₂ surface portion (13) and to which an only partially covering metallic layer is applied.

8. Use according to Claim 5, wherein the coating (15) consists of a ceramic, which provides the MnO₂ surface portion (13) and in which metallic particles (23) are embedded.

9. Use according to Claim 5, wherein the coating (15) consists of a metallic matrix (17) in which particles (16) of MnO₂ are embedded.

10. Use according to either of Claims 1 and 2, wherein the component or a layer applied thereto consists of a material (24) different from the metallic surface portion (14) and from MnO₂, and particles (25) are present in and/or on said material (24), which particles (25) each provide the metallic surface portions (14) and the MnO₂ surface portions (13) on their surface (12).

11. Use according to one of the preceding claims, wherein the surface has low wettability.

12. Use of a component according to one of the preceding claims in the food industry.

## Revendications

1. Utilisation d'un composant ayant une surface (12) antimicrobienne pour lutter contre des micro-organismes et/ou des champignons venant en contact avec le composant, la surface (12) ayant des parties (14) de surface métalliques et des premières parties (13) de surface de contact de MnO₂, la partie (14) de surface métallique étant en Ag et/ou en Ni et
l'oxyde de manganèse étant présent, au moins en partie, sous la forme y du MnO₂.

2. Utilisation suivant la revendication 1, dans laquelle
la proportion de structure présente sous la forme y du MnO₂ représente plus de 50% en poids du MnO₂.

3. Utilisation suivant la revendication 1, dans laquelle
le composant est constitué du métal mettant à disposition la partie (13) de surface métallique de la surface (12) antimicrobienne et une couche (18) en MnO₂, ne recouvrant que partiellement, est déposée sur ce composant.

4. Utilisation suivant l'une des revendications 1 ou 2, dans laquelle
le composant est en une céramique mettant à disposition la partie (13) de surface de la surface (12) de MnO₂ antimicrobienne et une couche en le métal, ne recouvrant que partiellement, est déposée sur ce composant.

5. Utilisation suivant l'une des revendications 1 ou 2, dans laquelle
le composant a un revêtement (15), qui met à disposition les parties (14) de surface métalliques et les parties (13) de surface de MnO₂ de la surface (12).

6. Utilisation suivant la revendication 5, dans laquelle
le revêtement (15) a une couche (19) métallique, sur laquelle est déposée une couche (20) en MnO₂ ne recouvrant que partiellement.

7. Utilisation suivant la revendication 5, dans laquelle
le revêtement (15) a une couche céramique, qui met à disposition la partie (13) de surface de MnO₂ et sur laquelle est déposée une couche métallique ne recouvrant que partiellement.

8. Utilisation suivant la revendication 5, dans laquelle
le revêtement (15) est constitué d'une céramique, qui met à disposition la partie (13) de surface de MnO₂ et dans laquelle sont incorporées des particules (23) métalliques.

9. Utilisation suivant la revendication 5, dans laquelle
le revêtement (15) est en une matrice (17) métallique, dans laquelle sont incorporées des particules (16) en MnO₂.

10. Utilisation suivant l'une des revendications 1 ou 2, dans laquelle
cette couche ou une couche déposée sur celle-ci est en un matériau (24) différent de la partie (14) de surface métallique et de MnO₂ et il y a dans celui-ci et/ou sur celui-ci des particules (25), qui mettent à disposition sur leur surface (25), respectivement, les parties (14) de surface métalliques et les parties (13) de surface de MnO₂.

11. Utilisation suivant l'une des revendications précédentes, dans laquelle
la surface est mouillable difficilement.

12. Utilisation d'un composant suivant l'une des revendications précédentes dans l'industrie alimentaire.
